# FASCICULE DE BREVET EUROPEEN

(11) **EP 3 373 330 B1**
(45) Date de publication et mention de la délivrance du brevet: **19.06.2024**
(21) Numéro de dépôt: 17187590.9
(22) Date de dépôt: 23.08.2017
(51) Int. Cl.: H01L 23/00, G06K 19/073, G06F 21/75, H03K 3/356, H03K 19/003

(54) **ARCHITECTURE DE PUCE ÉLECTRONIQUE**
AUFBAU EINES ELEKTRONISCHEN CHIPS
ELECTRONIC CHIP ARCHITECTURE

(30) Priorité: 06.03.2017 FR 1751788
(43) Date de publication de la demande: 12.09.2018
(73) Titulaire: STMICROELECTRONICS (ROUSSET) SAS, 13790 Rousset (FR)
(72) Inventeur: SARAFIANOS, Alexandre, 13530 TRETS (FR); ORDAS, Thomas, 83470 POURCIEUX (FR)
(74) Mandataire: Cabinet Beaumont

(56) Documents cités:
- EP-A1- 2 369 622
- EP-A1- 2 955 750
- WO-A1-97/24765
- WO-A1-2004/047172
- DE-A1-102004 009 622
- FR-A1- 2 958 078
- FR-A1- 2 981 783
- US-A1- 2011 193 616
- US-A1- 2015 135 340

## Description

### Domaine

La présente demande concerne une architecture particulière de puce électronique.

### Exposé de l'art antérieur

Des puces électroniques telles que des puces de cartes bancaires contiennent des données confidentielles susceptibles d'être convoitées par des pirates. Pour obtenir ces données, un pirate peut mener une attaque en balayant la face arrière de la puce par des impulsions laser. L'impact du laser perturbe le fonctionnement de la puce, et le pirate mène son attaque en observant les conséquences de ces perturbations, appelées fautes, sur l'activité des circuits de la puce. Pour perturber le fonctionnement de la puce, le pirate peut aussi appliquer des potentiels positifs ou négatifs élevés, typiquement de plusieurs dizaines de volts, par exemple de plus de 50 V, au moyen d'une sonde en contact avec la face arrière.

Il est souhaitable de disposer de puces électroniques protégées contre ce type d'attaque, dit attaque par injection de fautes, les dispositifs connus présentant divers inconvénients et difficultés de mise en oeuvre. Il est fait référence au document F2 2 958 078 A1.

### Résumé

Un mode de réalisation prévoit un dispositif permettant de pallier tout ou partie des inconvénients décrits ci-dessus.

Ainsi, un mode de réalisation prévoit une puce électronique comprenant : un substrat semiconducteur dopé d'un premier type de conductivité ; des caissons d'un deuxième type de conductivité du côté de la face avant de la puce, dans et sur lesquels sont formés des éléments de circuits ; une ou plusieurs dalles du deuxième type de conductivité enterrées sous les caissons et séparées des caissons par une partie du substrat; pour chaque dalle enterrée, un puits du deuxième type de conductivité, polarisable, qui s'étend de la face avant du substrat à la dalle enterrée ; P pour chaque puits, au moins une bascule de la puce comprenant, en partie supérieure de chaque puits, un premier transistor MOS à canal du premier type de conductivité, le premier transistor étant un élément de ladite au moins une bascule ; et un circuit de détection d'un changement de niveau logique d'une des bascules.

Selon un mode de réalisation, le circuit de détection est adapté à initialiser les bascules à un premier niveau logique, et à détecter le passage de l'une des bascules à un deuxième niveau logique.

Selon un mode de réalisation, la puce comprend, en partie supérieure de chaque puits, un deuxième transistor MOS à canal du premier type de conductivité, le deuxième transistor étant un élément d'une bascule supplémentaire, le circuit de détection étant adapté en outre à initialiser les bascules supplémentaires au deuxième niveau logique, et à détecter le passage de l'une des bascules supplémentaires au premier niveau logique.

Selon un mode de réalisation, la puce comprend, en partie supérieure de chaque puits, une pluralité de transistors MOS à canal du premier type de conductivité, chaque transistor étant un élément d'une bascule, le circuit de détection étant adapté à détecter un changement du niveau logique d'une majorité des bascules.

Selon un mode de réalisation, pour chaque puits, chacune desdites bascules comprend plusieurs transistors MOS à canal du premier type de conductivité situés en partie supérieure du puits.

Selon un mode de réalisation, les dalles enterrées ont une épaisseur comprise entre 1 et 2 µm et sont séparées des caissons de 1 à 2 µm.

Selon un mode de réalisation, les dalles enterrées sont rectangulaires de plus de 40 µm de côtés.

Selon un mode de réalisation, les dalles enterrées sont rectangulaires de moins de 80 µm de côtés.

Selon un mode de réalisation, chaque puits a des dimensions latérales comprises entre 1 et 3 µm.

Selon un mode de réalisation, chaque puits comprend un contact de polarisation de dimensions latérales comprises entre 100 et 300 nm.

Selon un mode de réalisation, le circuit de détection est adapté à déclencher, en cas de détection, des contre-mesures destinées à stopper une attaque.

Un autre mode de réalisation prévoit un procédé de protection contre une attaque d'une puce ci-dessus, comprenant successivement : a) polariser les puits et initialiser les niveaux logiques des bascules ; b) détecter un changement de niveau logique d'une des bascules ; et c) déclencher des contre-mesures destinées à stopper l'attaque si un changement de niveau logique est détecté à l'étape b).

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A est une vue en coupe partielle et schématique d'un mode de réalisation d'une puce protégée contre des attaques ;
la figure 1B est une vue en coupe schématique, à une échelle différente de celle de la figure 1A, d'une partie de la puce de la figure 1A ;
la figure 2 est une vue en coupe partielle et schématique d'un mode de réalisation d'une puce protégée contre des attaques ; et
la figure 3 est une vue de dessus partielle et schématique d'un mode de réalisation d'une puce protégée contre des attaques.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, des circuits de détection de changement de niveau logique ne sont pas décrits en détail, leur réalisation étant à la portée de l'homme du métier à partir des indications fonctionnelles de la description qui suit. En outre, des circuits contenant des données confidentielles, de types connus par ailleurs, ne sont ni représentés ni décrits en détail.

Dans la description qui suit, lorsque l'on fait référence à des qualificatifs de position relative, tels que les termes "dessus", "dessous", "supérieur", "inférieur", etc., il est fait référence à la position de l'élément concerné dans les figures concernées.

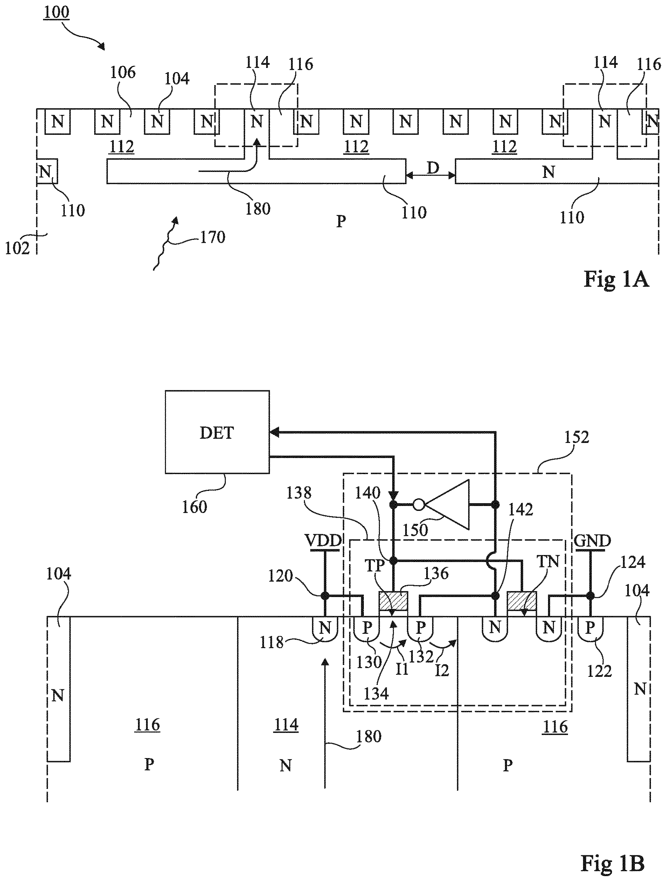

La figure 1A est une vue en coupe partielle et schématique d'un mode de réalisation d'une puce 100 protégée contre des attaques.

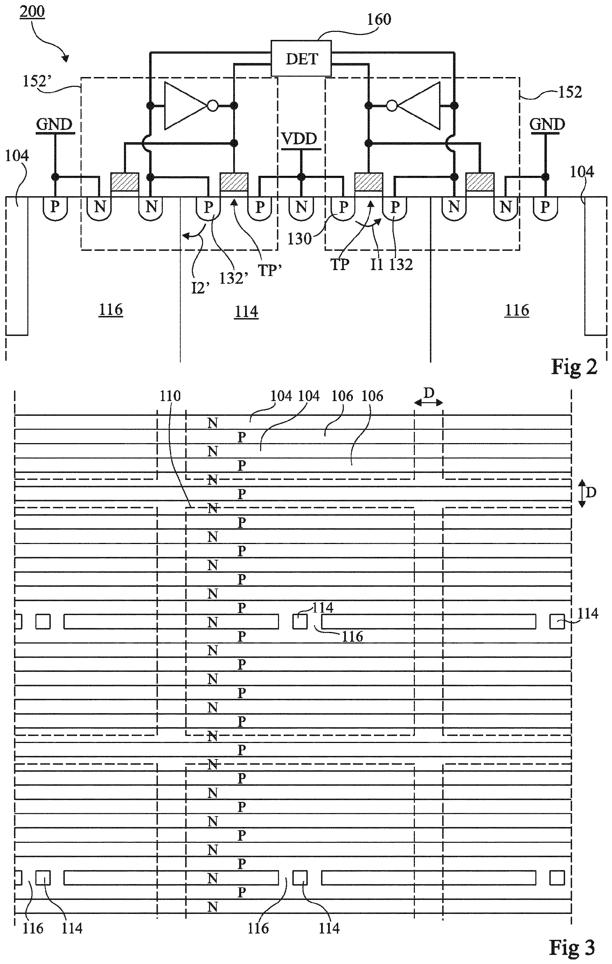

La puce 100 comprend un substrat semiconducteur dopé 102, par exemple en silicium dopé de type P. Le substrat comprend des caissons 104 dopés de type N qui s'étendent à partir de la face avant de la puce (face supérieure). Les caissons ont par exemple la forme de bandes allongées perpendiculairement au plan de la figure, comme cela sera décrit en relation avec la figure 3. Les caissons 104 de type N sont séparés les uns des autres par des régions 106 du substrat, de type P. Des circuits sensibles, contenant des informations confidentielles convoitées par un pirate, sont susceptibles d'être formés dans et sur les caissons 104 et/ou les régions 106. A titre d'exemple, les circuits sensibles, non représentés, comprennent des transistors MOS à canal P dans et sur les caissons 104, et des transistors MOS à canal N dans et sur les régions 106.

Des dalles semiconductrices 110 dopées de type N sont enterrées dans le substrat 102 sous les circuits sensibles. Les dalles enterrées sont séparées des caissons N 104 par une partie 112 du substrat, dopée de type P.

Un puits semiconducteur 114 dopé de type N qui s'étend à partir de la face avant du substrat 102 vient au contact de chacune des dalles enterrées 110, de préférence au centre de la dalle enterrée. Les puits 114 sont distincts des caissons 104, et sont séparés des caissons 104 par des régions 116 du substrat, de type P.

La figure 1B est une vue en coupe agrandie schématique de la partie supérieure d'un puits 114. Chaque puits 114 est muni d'une zone de prise de contact 118, reliée à un noeud 120 d'application d'un potentiel haut de polarisation VDD. Une région 116 de type P entoure le puits 114 et est munie d'une zone de prise de contact 122 reliée à un noeud 124 d'application d'un potentiel de référence, par exemple une masse GND.

Un transistor TP de type MOS à canal P est situé en partie supérieure de chaque puits N 114. Le transistor TP comprend des zones de source 130 et de drain 132, de part et d'autre d'une région de canal 134 située sous une grille isolée 136. La région de canal 134 est une partie supérieure du puits N 114. La zone de source 130 est reliée au noeud 120.

Le transistor TP est relié à un transistor TN de type MOS à canal N, situé de préférence dans la région 116 entourant le puits 114, en sorte de former avec lui un inverseur 138. Les grilles des transistors TP et TN interconnectées correspondent au noeud 140 d'entrée de l'inverseur 138, et les drains des transistors TP et TN interconnectés correspondent au noeud 142 de sortie de l'inverseur 138. En outre, un inverseur 150, représenté de manière symbolique, a son entrée reliée au noeud 142 et sa sortie reliée au noeud 140. L'inverseur 150 est constitué d'un transistor MOS à canal P, situé de préférence dans le puits 114, et d'un transistor MOS à canal N, situé de préférence dans la région 116. L'ensemble de l'inverseur 138 et de l'inverseur 150 reliés tête-bêche constitue une bascule 152, c'est-à-dire un circuit logique prévu, lorsqu'un niveau logique initial lui est appliqué, à se mettre à ce niveau logique, et, lorsqu'aucun niveau logique ne lui est appliqué, à se maintenir au niveau logique initial.

Les noeuds 140 et 142 sont reliés à un circuit de détection 160 (DET). A titre d'exemple, le circuit de détection 160 est commun aux diverses bascules 152 des divers puits 114.

Le circuit de détection est prévu pour appliquer temporairement au noeud 140 un niveau logique haut au cours d'une phase de démarrage de la puce, par exemple à la mise sous tension. La bascule 152 se trouve ainsi initialisée et fournit le niveau haut sur le noeud 140 et le niveau bas sur le noeud 142. Au cours du fonctionnement de la puce, le circuit 160 n'applique aucun niveau logique au noeud 140. Le circuit de détection est prévu pour détecter un changement de niveau logique de la bascule, par exemple sur le noeud 142. En cas de changement de ce niveau, la puce prend des contre-mesures destinées à stopper une attaque, par exemple en arrêtant de fonctionner, ou en détruisant les données confidentielles.

En fonctionnement, en l'absence d'attaque, le niveau logique sur le noeud 142 reste bas, du fait du fonctionnement normal de la bascule 152. Aucun changement de niveau logique de la bascule 152 n'est détecté, et la puce fonctionne normalement.

Au cours d'une tentative d'attaque, un pirate cherche à perturber des circuits sensibles situés au-dessus d'une des dalles enterrées 110, à partir de la face arrière, par exemple par un laser 170. Du fait que la dalle 110 est polarisée au potentiel VDD, elle collecte des électrons photogénérés, et ces électrons se dirigent vers la zone de prise de contact 118 (flèches 180 illustrées en figures 1A et 1B). La présence des électrons à proximité de la zone 118 diminue le potentiel de la région 114 située sous le transistor TP, qui devient passant (courant I1). Le potentiel du noeud 142 passe au niveau haut, et la bascule change de niveau logique. Ce changement de niveau logique déclenche la mise en oeuvre des contre-mesures, et l'attaque est contrée.

Les circuits sensibles situés au-dessus d'une des dalles enterrées 110 se trouvent ainsi protégés contre les attaques par laser. En outre, on pourra prévoir entre les dalles 110 voisines une distance D inférieure au diamètre du laser, par exemple la distance la plus faible possible, par exemple inférieure à 4 µm. On obtient ainsi une protection de l'ensemble des circuits sensibles de la puce contre les attaques par laser.

En cas d'attaque par une sonde portée à un potentiel de valeur négative élevée, l'attaque est détectée et contrée de la même manière qu'une attaque par laser. En effet, la jonction PN entre la dalle 110 et le substrat 102 entre en avalanche et des électrons sont collectés par la dalle 110 vers la partie supérieure du puits.

En cas d'attaque par une sonde portée à un potentiel positif élevé, la jonction PN entre la dalle 110 et le substrat 102 est passante, et l'attaque est également détectée et contrée.

Ainsi, la puce est protégée contre divers types d'attaque par injection de fautes d'une manière particulièrement simple à mettre en oeuvre. En particulier, l'utilisation de la bascule 152 permet de contrer des attaques sans utiliser de composants analogiques tels que diverses sources de courant ou diverses résistances, difficiles à mettre en oeuvre et à régler.

De préférence, la zone de prise de contact 118 est petite, de dimensions latérales par exemple inférieures à 300 nm, par exemple comprises entre 100 et 300 nm. De ce fait, la résistance que la zone 118 oppose à l'évacuation des électrons vers le potentiel VDD est élevée, ce qui permet de détecter l'attaque d'une manière particulièrement sensible. On obtient une protection particulièrement efficace contre les attaques.

A titre d'exemple, les caissons 104 s'étendent jusqu'à une profondeur comprise entre 1 et 2 µm. L'épaisseur de la partie 112 de type P, entre les caissons N 104 et les dalles 110, est comprise entre 1 et 2 µm. A titre d'exemple, l'épaisseur des dalles enterrées est comprise entre 1 et 2 µm.

A titre de variante, le circuit de détection peut être prévu pour appliquer temporairement au noeud 140, au cours de la phase de démarrage, le niveau logique bas, initialisant ainsi la bascule de la manière inverse de celle décrite précédemment. En cas d'attaque, le circuit 160 détecte un passage à un niveau logique bas du noeud 142. En effet, en cas d'attaque par laser, ou en cas d'attaque par sonde de potentiel négatif élevé, la présence d'électrons dans le puits 114 rend passant le transistor bipolaire constitué de la région de drain 132 du transistor TP, du puits N 114, et de la région P 116 (courant I2), ce qui provoque une baisse du potentiel du noeud 142.

Ainsi, dans la variante ci-dessus, on détecte les attaques qui provoquent le passage au niveau logique bas du noeud 142, au lieu du passage au niveau logique haut décrit précédemment. Le sens du changement de niveau logique dépend en fait de divers paramètres de l'attaque tels que sa durée et/ou son intensité, et de la configuration du transistor TP, de la zone 118 et de la partie supérieure du puits 114, en particulier leurs formes et leur agencement. On peut choisir cette configuration pour favoriser un sens de changement de niveau logique par rapport à l'autre sens. En outre, bien qu'une seule zone de prise de contact 118 soit représentée en figure 1B, on peut utiliser plusieurs zones de prises de contact 118 pour un même puits 114, afin d'influer sur la sensibilité et le sens du changement de niveau logique.

La figure 2 illustre un mode de réalisation d'une puce 200 protégée contre des attaques, comprenant les mêmes éléments que la puce 100 des figures 1A et 1B, agencés d'une manière similaire. La figure 2 est une vue en coupe de la partie supérieure d'un puits 114. Outre les mêmes éléments que la puce 100, la puce 200 comprend une deuxième bascule 152' similaire à la bascule 152. La deuxième bascule 152' comprend en particulier un transistor TP' de type MOS à canal P situé dans et sur la partie supérieure du puits 114.

Le circuit de détection est prévu pour initialiser, au cours de la phase de démarrage de la puce, la bascule 152 au niveau logique bas sur le noeud 142 de drain du transistor TP, et la bascule 152' au niveau logique haut sur le noeud 142' de drain du transistor TP'. Les bascules 152 et 152' sont ainsi initialisées à des niveaux logiques différents. Le circuit de détection est prévu pour détecter le changement de niveau logique de la bascule 152 et/ou de la bascule 152'.

En cas d'attaque, celle-ci est contrée, parce qu'un courant I1, circulant de source à drain du transistor TP, provoque un changement de niveau logique de la bascule 152 dans un premier sens, et/ou parce qu'un courant I2', circulant de la zone de drain 132' du transistor TP' à la région 116, provoque un changement de niveau logique de la bascule 152' dans un deuxième sens. Comme ceci a été mentionné, selon la configuration des transistors TP ou TP' et celle de la partie supérieure du puits, les changements de niveaux logiques se produisent avec plus de sensibilité dans un sens que dans l'autre.

Du fait que l'on utilise deux bascules ayant chacune un transistor de type MOS dans la partie supérieure du puits et que ces bascules sont initialisées à deux niveaux logiques différents, le niveau de sensibilité de détection de l'attaque correspond au sens de changement qui se produit avec la plus grande sensibilité. Les attaques sont ainsi détectées avec une sensibilité particulièrement élevée, et le niveau de protection est particulièrement élevé. De plus, on obtient un niveau de protection élevé sans choisir de favoriser l'un ou l'autre sens de changement de niveau logique par une configuration particulière des éléments en partie supérieure du puits, ce qui permet d'obtenir ce niveau de protection d'une manière particulièrement simple.

la figure 3 est une vue de dessus partielle et schématique d'une puce du type de la puce 100 des figures 1A et 1B ou de la puce 200 de la figure 2.

Les caissons N 104 et les régions P 106 forment des bandes parallèles alternées au-dessus des dalles enterrées 110. Les circuits sensibles, non représentés, sont par exemple des circuits logiques comprenant, comme mentionné ci-dessus, des transistors MOS à canal P et des transistors MOS à canal N situés dans et sur des bandes 104 et 106 voisines. A titre d'exemple, les largeurs des bandes sont comprises entre 1 et 3 µm. A titre d'exemple, les dalles enterrées sont rectangulaires, de préférence carrées. Les dimensions des côtés des dalles enterrées sont par exemple comprises entre 40 et 80 µm. Les dalles enterrées sont de préférence disposées régulièrement.

Comme mentionné ci-dessus, les puits 114 sont situés de préférence aux centres des dalles. Les puits 114, entourés des régions 116, sont situés à l'emplacement de bandes 104 qui sont interrompues pour leur laisser la place. Les puits 114 ont de préférence en vue de dessus une forme carrée de mêmes dimensions que la largeur des bandes 104, alignée avec les bandes 104.

Selon un avantage, la surface de la puce occupée par les éléments de protection est particulièrement faible. En effet, les éléments de protection associés à un seul des puits 114 permettent de protéger tous les circuits sensibles situés au-dessus de la dalle enterrée 110 considérée, celle-ci ayant par exemple plus de 40 µm de côté.

Selon un autre avantage, du fait que les dimensions des côtés des dalles sont par exemple inférieures à 80 µm, et du fait que les puits 114 sont en position centrale sur les dalles enterrées, une éventuelle attaque est détectée rapidement. En effet, en cas d'attaque, les électrons collectés par la dalle 110 concernée ont alors une distance courte à parcourir pour rejoindre la partie supérieure du puits 114.

Selon un autre avantage, du fait que les puits 114 sont situés dans l'alignement des bandes, et du fait que l'on utilise des bascules 152, le dispositif de protection est particulièrement simple à réaliser en même temps que les circuits logiques de la puce. En effet, les bascules sont des circuits logiques comprenant les transistors MOS à canal N et à canal P qui peuvent être réalisés dans et sur les puits 114 et les régions 116 en même temps et de la même manière que les transistors MOS des circuits logiques de la puce.

Des modes de réalisation particuliers ont été décrits. Diverses variantes et modifications apparaîtront à l'homme de l'art. En particulier, bien qu'un type de bascule particulier ait été décrit pour un puits 114, on peut utiliser tout type de bascule comprenant un transistor MOS à canal P dont la région de canal est une partie du puits 114, cette bascule étant telle que le changement d'état passant/non-passant du transistor provoque le changement du niveau logique de la bascule. En outre, la bascule peut comprendre plusieurs transistors MOS à canal P dont les régions de canal sont des parties du puits 114.

De plus, bien que la puce 100 comprenne une bascule pour chaque puits 114 et que la puce 200 comprenne deux bascules pour chaque puits 114, on peut prévoir pour chaque puits 114 plus de deux bascules, chaque bascule comprenant chacune, comme les bascules des puces 100 et 200, au moins un transistor dans et sur le puits 114. Le circuit de détection peut alors être adapté à détecter pour l'un des puits 114 un changement de niveau logique d'une majorité des bascules. On élimine ainsi le risque qu'une seule des bascules ne provoque, par une sensibilité trop grande, le déclenchement des contre-mesures en l'absence d'attaque.

Bien que les modes de réalisation décrits comprennent plusieurs dalles enterrées 110, chacune reliée à un puits 114, on notera qu'il est possible de prévoir une seule dalle enterrée sous l'ensemble des circuits sensibles, reliée à un seul puits 114. En outre, bien que des dalles rectangulaires de moins de 80 µm de côtés aient été décrites, les dalles peuvent avoir des dimensions supérieures à 80 µm, par exemple de plus de 1 mm. En particulier, si on a prévu une seule dalle enterrée, la dalle peut être rectangulaire de plus de 1 mm de côtés.

Par ailleurs, d'autres modes de réalisation sont possibles, correspondant aux modes de réalisation décrits dans lesquels on a échangé les types de conductivité N et P et les niveaux haut et bas des potentiels.

## Revendications

1. Puce électronique comprenant :
un substrat semiconducteur (102) dopé d'un premier type de conductivité ;
des caissons (104) d'un deuxième type de conductivité du côté de la face avant de la puce, dans et sur lesquels sont formés des éléments de circuits ;
une ou plusieurs dalles (110) du deuxième type de conductivité enterrées sous les caissons et séparées des caissons par une partie du substrat ;
pour chaque dalle enterrée, un puits (114) du deuxième type de conductivité, polarisable, qui s'étend de la face avant du substrat à la dalle enterrée ;
pour chaque puits, au moins une bascule de la puce comprenant, en partie supérieure du puits, un premier transistor MOS (TP) à canal du premier type de conductivité, le premier transistor étant un élément de ladite au moins une bascule (152) ; et
un circuit de détection (160) d'un changement de niveau logique d'une des bascules.

2. Puce selon la revendication 1, dans laquelle le circuit de détection (160) est adapté à initialiser les bascules (152) à un premier niveau logique, et à détecter le passage de l'une des bascules à un deuxième niveau logique.

3. Puce selon la revendication 2, comprenant, en partie supérieure de chaque puits, un deuxième transistor MOS (TP') à canal du premier type de conductivité, le deuxième transistor étant un élément d'une bascule supplémentaire (152'), le circuit de détection (160) étant adapté en outre à initialiser les bascules supplémentaires au deuxième niveau logique, et à détecter le passage de l'une des bascules supplémentaires au premier niveau logique.

4. Puce selon l'une quelconque des revendications 1 à 3, comprenant, en partie supérieure de chaque puits, une pluralité de transistors MOS (TP, TP') à canal du premier type de conductivité, chaque transistor étant un élément d'une bascule (152, 152'), le circuit de détection étant adapté à détecter un changement du niveau logique d'une majorité des bascules.

5. Puce selon l'une quelconque des revendications 1 à 4, dans laquelle, pour chaque puits (114), chacune desdites bascules (152) comprend plusieurs transistors MOS à canal du premier type de conductivité situés en partie supérieure du puits.

6. Puce selon l'une quelconque des revendications 1 à 5, dans laquelle les dalles enterrées (114) ont une épaisseur comprise entre 1 et 2 um et sont séparées des caissons de 1 à 2 um.

7. Puce selon l'une quelconque des revendications 1 à 6, dans laquelle les dalles enterrées (114) sont rectangulaires de plus de 40 um de côtés.

8. Puce selon l'une quelconque des revendications 1 à 7, dans laquelle les dalles enterrées (114) sont rectangulaires de moins de 80 µm de côtés.

9. Puce selon l'une quelconque des revendications 1 à 8, dans laquelle chaque puits (114) a des dimensions latérales comprises entre 1 et 3 um.

10. Puce selon l'une quelconque des revendications 1 à 9, dans laquelle chaque puits (114) comprend un contact de polarisation (118) de dimensions latérales comprises entre 100 et 300 nm.

11. Puce électronique selon l'une quelconque des revendications 1 à 10, dans laquelle le circuit de détection (160) est adapté à déclencher, en cas de détection, des contre-mesures.

12. Procédé de protection contre une attaque d'une puce selon l'une quelconque des revendications 1 à 11, comprenant successivement :
a) polariser les puits et initialiser les niveaux logiques des bascules ;
b) détecter un changement de niveau logique d'une des bascules ; et
c) déclencher des contre-mesures destinées à stopper l'attaque si un changement de niveau logique est détecté à l'étape b) .

## Patentansprüche

1. Elektronischer Chip, der Folgendes aufweist:
ein dotiertes Halbleitersubstrat (102) eines ersten Leitfähigkeitstyps; Kästen (104) eines zweiten Leitfähigkeitstyps auf der Vorderseite des Chips, in und auf denen Schaltungselemente ausgebildet sind;
eine oder mehrere Platten (110) des zweiten Leitfähigkeitstyps, die unter den Kästen vergraben und von den Kästen durch einen Teil des Substrats getrennt sind;
für jede vergrabene Platte eine polarisierbare Wanne (114) des zweiten Leitfähigkeitstyps, die sich von der Vorderseite des Substrats bis zur vergrabenen Platte erstreckt;
für jede Wanne mindestens ein Flip-Flop des Chips, das in einem oberen Abschnitt der Wanne einen ersten MOS-Transistor (TP) mit einem Kanal des ersten Leitfähigkeitstyps aufweist, wobei der erste Transistor ein Element des mindestens einen Flip-Flops (152) ist; und
eine Schaltung zum Detektieren (160) einer Änderung des Logigpegels eines der Flip-Flops.

2. Chip nach Anspruch 1, wobei die Detektierschaltung (160) so ausgelegt ist, dass sie die Flip-Flops (152) auf einem ersten Logikpegel initialisiert und den Übergang eines der Flip-Flops auf einen zweiten Logikpegel detektiert.

3. Chip nach Anspruch 2, der im oberen Teil jeder Wanne einen zweiten MOS-Transistor (TP') mit einem Kanal des ersten Leitfähigkeitstyps aufweist, wobei der zweite Transistor ein Element eines zusätzlichen Flip-Flops (152') ist, wobei die Detektierschaltung (160) außerdem so beschaffen ist, dass sie die zusätzlichen Flip-Flops auf dem zweiten Logikpegel initialisiert und den Übergang eines der zusätzlichen Flip-Flops auf den ersten Logikpegel detektiert.

4. Chip nach einem der Ansprüche 1 bis 3, der im oberen Teil jeder Wanne eine Vielzahl von MOS-Transistoren (TP, TP') mit Kanälen des ersten Leitfähigkeitstyps aufweist, wobei jeder Transistor ein Element eines Flip-Flops (152, 152') ist, wobei die Detektierschaltung so beschaffen ist, dass sie eine Änderung des Logikpegels einer Mehrheit der Flip-Flops detektiert.

5. Chip nach einem der Ansprüche 1 bis 4, wobei für jede Wanne (114) jedes der Flip-Flops (152) mehrere MOS-Transistoren mit Kanälen des ersten Leitfähigkeitstyps aufweist, die im oberen Teil der Wanne angeordnet sind.

6. Chip nach einem der Ansprüche 1 bis 5, wobei die vergrabenen Platten (114) eine Dicke zwischen 1 und 2 µm aufweisen und von den Kästen um 1 bis 2 µm beabstandet sind.

7. Chip nach einem der Ansprüche 1 bis 6, wobei die vergrabenen Platten (114) Rechtecke mit einer Seitenlänge von mehr als 40 µm sind.

8. Chip nach einem der Ansprüche 1 bis 7, bei dem die vergrabenen Platten (114) Rechtecke mit einer Seitenlänge von weniger als 80 µm sind.

9. Chip nach einem der Ansprüche 1 bis 8, wobei jede Wanne (114) seitliche Abmessungen zwischen 1 und 3 µm aufweist.

10. Chip nach einem der Ansprüche 1 bis 9, wobei jede Wanne (114) einen Vorspannkontakt (118) mit seitlichen Abmessungen zwischen 100 und 300 nm aufweist.

11. Chip nach einem der Ansprüche 1 bis 10, wobei die Detektierschaltung (160) geeignet ist, im Falle einer Detektierung Gegenmaßnahmen auszulösen.

12. Verfahren zum Schutz eines Chips nach einem der Ansprüche 1 bis 11 vor einem Angriff, wobei das Verfahren nacheinander Folgendes aufweist:
a) Vorspannen der Wannen und Initialisieren der Logikpegel der Flip-Flops;
b) Detektieren einer Änderung des Logikpegels eines der Flip-Flops; und
c) Auslösen von Gegenmaßnahmen, die dazu bestimmt sind, den Angriff zu stoppen, wenn in Schritt b) eine Änderung des Logikpegels detektiert wird.

## Claims

1. Electronic chip comprising:
a doped semiconductor substrate (102) of a first conductivity type;
boxes (104) of a second conductivity type on the side of the front face of the chip, in and on which circuit elements are formed;
one or more slabs (110) of the second type of conductivity buried under the boxes and separated from the boxes with a portion of the substrate;
for each buried slab, a well (114) of the second type of conductivity, polarizable, which extends from the front face of the substrate to the buried slab;
for each well, at least one flip-flop of the chip comprising, in a upper portion of the well, a first MOS transistor (TP) with a channel of the first conductivity type, the first transistor being an element of said at least one flip-flop (152); and
a circuit for detecting (160) a change in logic level of one of the flip-flops.

2. Chip according to claim 1, wherein the detecting circuit (160) is adapted to initialize the flip-flops (152) at a first logic level, and to detect the passage of one of the flip-flops to a second logic level.

3. Chip according to claim 2, comprising, in the upper portion of each well, a second MOS transistor (TP') with a channel of the first conductivity type, the second transistor being an element of an additional flip-flop (152'), the detecting circuit (160) furthermore being adapted to initialize the additional flip-flops at the second logic level, and to detect the passage of one of the additional flip-flops to the first logic level.

4. Chip according to any one of claims 1 to 3, comprising, in the upper portion of each well, a plurality of MOS transistors (TP, TP') with channels of the first conductivity type, each transistor being an element of a flip-flop (152, 152'), the detecting circuit being adapted to detect a change in the logic level of a majority of the flip-flops.

5. Chip according to any one of claims 1 to 4, wherein, for each well (114), each of said flip-flops (152) comprises several MOS transistors with channels of the first conductivity type, located in the upper portion of the well.

6. Chip according to any one of claims 1 to 5, wherein the buried slabs (114) have a thickness comprised between 1 and 2 µm and are separated from the boxes by 1 to 2 µm.

7. Chip according to any one of claims 1 to 6, wherein the buried slabs (114) are rectangles of more than 40 µm side length.

8. Chip according to any one of claims 1 to 7, wherein the buried slabs (114) are rectangles of less than 80 µm side length.

9. Chip according to any one of claims 1 to 8, wherein each well (114) has lateral dimensions comprised between 1 and 3 µm.

10. Chip according to any one of claims 1 to 9, wherein each well (114) comprises a biasing contact (118) of lateral dimensions comprised between 100 and 300 nm.

11. Chip according to any one of claims 1 to 10, wherein the detecting circuit (160) is adapted to trigger, in case of detection, countermeasures.

12. Method for protecting a chip according to any one of claims 1 to 11 from an attack, comprising successively:
a) biasing the wells and initializing the logic levels of the flip-flops;
b) detecting a change in the logic level of one of the flip-flops; and
c) triggering countermeasures intended to stop the attack if a change in logic level is detected in step b).
